# EUROPÄISCHE PATENTSCHRIFT

(11) **EP 0 969 919 B1**
(45) Veröffentlichungstag und Bekanntmachung des Hinweises auf die Patenterteilung: **04.12.2002**
(21) Anmeldenummer: 98912374.0
(22) Anmeldetag: 23.02.1998
(51) Int. Cl.: B01J 19/00, C07H 21/00

(54) **VORRICHTUNG UND VERFAHREN ZUR AUTOMATISCHEN SYNTHESE VON MAKROMOLEKÜLEN**
AUTOMATED MACROMOLECULE SYNTHESISING PROCESS AND DEVICE
PROCEDE ET DISPOSITIF DE SYNTHESE AUTOMATIQUE DE MACROMOLECULES

(30) Priorität: 21.02.1997 DE 19707000
(43) Veröffentlichungstag der Anmeldung: 12.01.2000
(73) Patentinhaber: MERCKLE GMBH, 89143 Blaubeuren (DE)
(72) Erfinder: BRUGGER, Hermann, D-89171 Illerkirchberg (DE); REMBE, Christian, D-89077 Ulm (DE); BADER, Raoul, D-55130 Mainz-Laubenheim (DE); HOFER, Eberhard, P., D-89173 Lonsee (DE); SELIGER, Hartmut, D-89275 Elchingen (DE)
(74) Vertreter: Kinzebach, Werner, Dr.
(86) Internationale Anmeldenummer: EP9801030
(87) Internationale Veröffentlichungsnummer: WO98036828

(56) Entgegenhaltungen:
- WO-A-93/17785
- WO-A-95/11748
- WO-A-97/26986

## Beschreibung

Die Erfindung betrifft eine Vorrichtung und ein Verfahren zur automatischen Synthese von Makromolekülen, insbesondere von Oligonucleotiden, und die Verwendung einer solchen Vorrichtung.

Synthetische Oligonucleotidsequenzen werden routinemäßig in automatenunterstützten Verfahren hergestellt. Als Synthons werden hierbei Nucleosidamidophosphite, Nucleosid-H-phosphonate oder andere in der Literatur beschriebene monomere oder oligomere Bausteine von biologischen oder abiologisch modifizierten Nucleinsäuren verwendet (Sonveaux, E.(1986) *Bioorg. Chem. 14, 274-325;* Uhlmann, E. and Peyman, A. (1990) *Chem. Rev. 90: 544-584*). Die Synthesen werden in der Regel an Festphasen durchgeführt. Typischerweise sind die für die Oligonucleotidsynthese verwendeten automatischen Apparate so aufgebaut, daß Trägermaterialien in granulierter Form verwendet werden. Diese werden als Festbett in einer Säule von Reagenzien, Lösungsmitteln und anderen Flüssigphasen durchströmt. In ähnlicher Weise werden Membranen als durchspülbare Festphasen angewandt. Die Dosierung der flüssigen Phasen erfolgt in der Regel zeitgesteuert mittels eines Prozeßrechners in einem kommerziell erhältlichen Syntheseautomaten. Die Kettenverlängerung erfolgt schrittweise. Für die jeweilige Anlagerung eines Monomeren wird ein vielstufiger Reaktionszyklus durchlaufen. Die Ausbeute, die bei einem Kettenverlängerungszyklus erzielt wird, wird in der Regel bei der Abspaltung der Schutzgruppe durch spektroskopische oder andere analytische Methoden gemessen.

Als granulierte Trägermaterialien sind zum Beispiel Kieselgel, controlled pore glass, Polystyrol, Kompositmaterialien, u.a. in Form unregelmäßig geformter Partikel oder von Kugeln unterschiedlichen Durchmessers im Gebrauch. Für makroporöse, nicht quellbare Trägermaterialien wurden, unabhängig vom Material, Beladungen in der Größenordnung von 0,8-0,9 µMol Nucieosid/m² äußerer und innerer Oberfläche gemessen (Kotschi, U. (1988) *Dissertation Universität Ulm, Deutschland*).
Routinemäßig werden Ansätze im Bereich von ca. 0,2 µMol bis 1 µMol wachsender Ketten im Automaten gefahren.

Die gleichzeitige Synthese mehrerer Oligonucleotidsequenzen kann einerseits auf rein präparativer Basis durch Vermehrung der Zahl der anzusteuernden mit Polymerträger gefüllten Säulen erfolgen, andererseits können trägergefüllte Kartuschen zum Beispiel in stapelbarer Anordnung parallel in gleichartige Synthesezyklen inkorporiert werden (Seliger, H. et al. (1989) *Bioengineering 6: 144-147*).
In neuerer Zeit sind vielfach auch oberflächenfunktionalisierte Flachmaterialien als Träger für parallele Oligonucleotidsynthesen verwendet worden. Hierzu zählen Glasplatten (Maskos, U. and Southern E.M. (1992) *Nucleic Acids Res. 20: 1679-1684*), Silicium-Wafer (Pease, A.C. et al. *Proc. Natl. Acad. Sci. USA 91: 5022-5026*), aber auch oberflächenfunktionalisierte Polypropylen-Folien (Matson, R.S. et al. (1994) *Analytical Biochemistry 217: 306-310*). Die Zielsetzung bei allen diesen Trägerverfahren geht dahin, auf einer gegebenen Trägerfläche eine möglichst große Zahl von "Synthesepunkten" unterzubringen, um damit analytisch / diagnostische Zielsetzungen zu verfolgen.

Die Zahl der parallel zu synthetisierenden Oligomersequenzen ist bei den üblichen kommerziell erhältlichen Syntheseautomaten einerseits durch den apparativen Aufwand, andererseits durch die Anordnung der Trägerelemente im Stapel begrenzt. Dadurch ist eine permanente Ausnutzung der vorhanden Gerätekapazität aufgrund von Leerlaufzeiten nicht möglich, da die einzelnen Kartuschen immer von Hand aus dem Syntheseautomaten genommen werden müssen und neue angehängt werden müssen.

Bei den verwendeten Flachträgern für analytisch/diagnostische Zielsetzungen sind die pro "pixel" synthetisierten Oligonucleotidmengen extrem niedrig (im unteren picomol-Bereich), d.h. für präparative Zwecke normalerweise ungeeignet. Weiterhin ist die Reinheit des auf einem "Synthesepunkt" aufgepfropften Oligonucleotidmaterials durch das Auflösungsvermögen der "pixel" begrenzt, d.h. in der Regel läßt sich das "Verschmieren" einer Oligonucleotidsynthese in angrenzende Synthesepunkte nur schwer vermeiden.

Im Gegensatz zu diesen Arbeiten haben die Erfinder der vorliegenden Anmeldung bereits früher Polypropylenfolien durch chemische Oberflächenfunktionalisierung so hergerichtet, daß Beladungen mit Nucleosid von 5 - 7 nmol/cm² (50 - 70 µmol/m²) ermöglicht werden. Solche extrem hoch, aber ausschließlich oberflächlich beladenen Flachträger ermöglichen es, Oligonucleotid-Synthesen auf Oberflächensegmenten im cm²-Bereich durchzuführen und dabei eine für biochemisch/präparative Untersuchungen ausreichende Menge an Nucleotidsequenzen zu erzeugen (Seliger, H. et al. (1995) *Reactive & functional polymers 26:119-126*). Die außergewöhnlich gute Zugänglichkeit der Oberflächenbeladung für gelöste Reagenzien wurde durch die Synthese eines 200 Basen umfassenden Oligonucleotids in einer Einzelsynthese demonstriert (Bader, R. et al. (1997) *Nucleotides & Nucleosides 16: 829-833*).

In der deutschen Offenlegungsschrift DE 42 06 488 A2 ist eine Vorrichtung zur Durchführung zeitgleich oder sequentiell ablaufender chemischer Reaktionen beschrieben, die aus vier übereinanderliegenden Stäben besteht, deren Kontaktflächen eine luftdichte Abdichtung bewirken.

In der europäischen Patentanmeldung EP 0 385 433 A2 ist eine Vorrichtung zur kontinuierlichen Polymersynthese beschrieben, bei der eine bandartige Trägerfolie durch mehrere Tauchbäder geführt wird.

In WO 96/15450 ist ein gitterartig in einzelne Reaktionsfelder unterteiltes mikrolektronisches Halbleiter-Array beschrieben. Reagenzien können in die einzelnen Felder apliziert werden.

In einem Artikel von J. Weiler et al. (1996, *Analytical Biochemistry 243: 218-227*) wird eine Vorrichtung zur Oligonucleotidsynthese und deren Anwendung bei der DNA-Sequenzierung beschrieben. Eine Polypropylen-Folie wird mit länglichen Reaktionskammern in Kontakt gebracht. Nach einem ersten Reaktionsschritt wird die Folie um 90° gedreht und eine weitere Kopplungsreaktion durchgeführt.

In einem Artikel von R.S. Matson et al. (1995, *Analytical Biochemistry 224, 110-116*) wird die Oligonucleotidsynthese auf Polypropylenträgern und deren Anwendung bei der Lokalisation von Gendefekten beschrieben.

In der Dissertation von Raoul Bader, Universität Ulm, Deutschland, 1996, wurde eine manuell betätigbare Vorrichtung beschrieben, mit deren Hilfe Oligonucleotide auf einer funktionalisierten bandartigen Trägerfolie unter Verwendung eines herkömmlichen Syntheseautomaten synthetisiert werden können (die wichtigsten Ergebnisse dieser Dissertation wurden kürzlich von R. Bader et al. in *Nucleosides and Nucleotides, 16, 835-842 (1997)* beschrieben) . Die dort und in der Dissertation von Bader beschriebene Vorrichtung weist ein nach außen abdichtbares Synthesemodul auf, das Reaktionskammern und Fluidleitungen zum Befüllen und Entleeren der Reaktionskammern mit und von Reaktionsmedien umfaßt, wobei die bandartige Trägerfolie in das Synthesemodul einführbar ist und durch Zusammenpressen zweier Elemente des Synthesemoduls mit den Reaktionskammern in Kontakt gebracht werden kann.

Wenn die beiden Modulelemente wieder voneinander gelöst werden, kann das Folienband eine bestimmte Wegstrecke weitertransportiert werden, die dem Abstand zweier Synthesekammern entspricht. Durch das Transportieren der Trägerfolie, beispielsweise eines Polypropylenstreifens, kann auf dem Streifen eine lineare Abfolge von Synthesefeldern erzeugt werden, die entweder sequentiell voneinander unabhängige oder sequentiell überlappende Oligonucleotide enthalten. Mit dieser manuellen Vorrichtung konnte die prinzipielle Funktion des von Bader et al. vorgeschlagenen Syntheseverfahrens gezeigt werden. Die bekannte Vorrichtung ist jedoch nicht zur automatischen Synthese von Makromolekülen auf einem bandartigen Trägermaterial geeignet, insbesondere ist auch die Positioniergenauigkeit der Trägerfolie in dem Synthesemodul bei manueller Einstellung gering.

Aus WO 95/11748 A ist eine Vorrichtung nach dem Oberbegriff des Anspruchs 1 bekannt. Will man mit der bekannten Vorrichtung und dem entsprechenden Verfahren Makromoleküle mit hoher Sequenzvarianz synthetisieren, so nimmt die Ausbeute drastisch ab.

Aufgabe der vorliegenden Erfindung ist es daher, eine Vorrichtung und ein entsprechendes Verfahren anzugeben, das eine automatische Synthese von Makromolekülen auf einem Flachträgermaterial, insbesondere auf einem bandartigen Flachträgermaterial, mit hoher Ausbeute und mit hoher Sequenzvarianz erlaubt.

Diese Aufgabe wird gelöst durch die Vorrichtung zur automatischen Synthese von Makromolekülen auf einem bandartigen Trägermaterial gemäß vorliegendem Hauptanspruch.

Die erfindungsgemäße Vorrichtung umfaßt ein Synthesmodul in die das verschiebbare, bandartige Trägermaterial einführbar ist. Das Synthesemodul weist mehrere Reaktionskammern auf, die, in Verschiebungsrichtung des Trägermaterials gesehen, in einem bestimmten Abstand voneinander angeordnet sind. Zur automatischen Verschiebung des Trägermaterial sind durch eine Steuereinrichtung betätigbare Transportmittel vorgesehen, die so ausgebildet sind, das die jeweilige Transportstrecke dem Abstand der Reaktionskammern voneinander entspricht.

Die Steuereinrichtung arbeitet dabei vorzugsweise mit einem an sich bekannten Syntheseautomaten zusammen, der die notwendigen Reagenzien für die Kondensation der Monomere an die auf dem Trägerband entstehende Sequenz bereitstellt und den gesamten Reaktionszyklus steuert und überwacht. Nach jedem Kondensationsschritt sendet der Syntheseautomat ein Signal an die Steuereinrichtung für die Transportmittel und das Band wird eine bestimmte Wegstrecke weitertransportiert, die genau dem. Abstand der Reaktionskammern im Synthesemodul entspricht. Wenn die Reaktionskammern linear in Richtung der Verschiebung des Trägerbandes angeordnet sind, befinden sich - abgesehen von der in Verschiebungsrichtung ersten Synthesekammer - alle Synthesekammern auf Feldern der Folie, auf denen im vorherigen Schritt die Kopplung eines Monomers durchgeführt wurde.

Als Trägermaterial kann beispielsweise eine Polypropylenfolie (PP-Folie) verwendet werden, die nachträglich auf der Oberfläche funktionalisiert wurde. Bei dieser Funktionalisierung werden Hydroxylgruppen auf der Oberfläche eingeführt, an denen sich die Oligomersynthese durchführen läßt. Während eines Kopplungsschrittes müssen sich die Reaktionskammern leicht und vollständig mit den benötigten Reagenzien befüllen und entleeren lassen. Bei der Oligonucleotidsynthese muß beispielsweise bei der Kopplung eines Nucleosidphosphorsäureesteramids auf absolut wasserfreies Arbeiten geachtet werden, während beim nachfolgenden Oxidationsschritt Wasser notwendig ist. Auch müssen sich die Reaktionskammern möglichst gut nach außen abdichten lassen, insbesondere ist bei der Oligonucleotidsynthese auf absolut luftdichtes Arbeiten zu achten.

Die Transportmittel umfassen bevorzugt ein erstes motorbetriebenes Zugmittel, das nach dem Austrittsbereich des Trägermaterials aus dem Synthesemodul angeordnet ist. Dabei kann es sich beispielsweise um zwei gegeneinander preßbare Walzen handeln, zwischen denen das Trägerband eingeklemmt ist. Eine der Walzen kann mit einem Motor angetrieben werden, so daß bei Betätigung des Motors das Trägerband transportiert wird. Handelt es sich bei dem Trägerband um eine relativ flexible Folie, so ist mit einer solchen Anordnung ein unidirektionaler Transport des Trägerbandes möglich. Ist der Träger relativ starr, so kann durch Umschalten der Laufrichtung des Motors ein bidirektionaler Transport erreicht werden.

Bei der Steuereinrichtung kann es sich beispielsweise um einen speziellen Mikrocontroller handeln. Es kann jedoch auch ein entsprechend programmierter herkömmlicher Computer, etwa ein Laptop oder eine Workstation mit einer geeigneten Schnittstelle verwendet werden.

Gemäß einer vorteilhaften Ausführungsform der erfindungsgemäßen Vorrichtung umfassen die Transportmittel außerdem ein zweites motorbetriebenes Zugmittel, das vor dem Eintrittsbereich des Trägermaterials in das Synthesemodul angeordnet ist.

Gemäß dieser Ausführungsform kann auch bei einer flexiblen Folie ein bidirektionaler Bandtransport durchgeführt werden. Je nach Verschiebungsrichtung des Bandes arbeitet ein Zugmittel als Antrieb, während das auf der gegenüberliegenden Seite des Synthesemoduls angeordnete Zugmittel im Leerlauf betrieben wird. Bei einem bidirektionalen Transport des Bandes lassen sich Oligomersequenzen synthetisieren, deren Länge einem Vielfachen der Anzahl der Reaktionskammern entspricht. Im Gegensatz zu einer Erhöhung der Anzahl der Reaktionskammern lassen sich so beispielsweise Oligomersequenzen mit einem geringeren Überlappungsbereich synthetisieren.

Unabhängig davon ob lediglich ein Zugmittel oder zwei Zugmittel vorgesehen sind, wird das lediglich als Führung dienende Walzenpaar vorzugsweise eine gewisse Reibung aufweisen, so daß das Band stets unter einer gewissen Spannung transportiert wird.

Bevorzugt werden die Zugmittel von Schrittmotoren angetrieben. Mit Schrittmotoren ist eine präzise und reproduzierbare Bewegung und Positionierung des Trägerbandes erreichbar. Die Steuereinrichtung kann dabei eine Absolutverschiebung durchführen, indem für eine bestimmte Verschiebung eine bestimmte Schrittanzahl des Motors vorgegeben wird. Es ist jedoch auch möglich, ein Trägerband zu verwenden, das mit Bandmarken versehen ist, so daß die genaue Position des Bandes, beispielsweise mit optischen Sensoren kontrolliert werden kann, deren Signale wiederum von der Steuereinrichtung verarbeitet werden.

Gemäß einer vorteilhaften Ausführungsform weist das Synthesemodul im Ein- und Austrittsbereich des Trägermaterials Dichtlippen auf. Die Abdichtung des Synthesemoduls kann bei einer einfachen Ausführungsform der erfindungsgemäßen Vorrichtung mit Dichtlippen erfolgen, die direkt am Ein- und Austrittsbereich des Trägerbandes vorgesehen sind.

Bei einer besonders bevorzugten Variante der erfindungsgemäßen Vorrichtung umfaßt jedes Synthesemodul wenigstens zwei gegeneinander bewegliche Modulelemente, die jeweils der Oberund Unterseite des Trägerbandes zugeordnet sind, wobei zumindest ein Modulelement mit einem durch die Steuereinrichtung betätigbaren Stellmittel verbunden ist, welches ein lösbares, dichtes Aneinanderpressen der beiden Modulelemente ermöglicht. Wenn, wie bei der Oligonucleotidsynthese, auf einem vollständigen Luftabschluß geachtet werden muß, ist eine zweiteilige Ausführung der Modulelemente vorzuziehen. Die beiden Modulelemente können dabei gegeneinander bewegt werden und schließen zwischen sich die Ober- und Unterseite des Trägerbandes ein. Zum Transport des Trägerbandes werden die Modulelemente gelöst und das Band ist zwischen ihnen frei verschieblich. Zur Durchführung eines Syntheseschritts werden die Modulelemente durch Stellmittel gegeneinander gepreßt, so daß einerseits das Trägerband in seiner Position fixiert ist und andererseits die Reaktionskammern gegen die Umgebung luftdicht abgedichtet sind. Die Stellmittel werden ebenfalls von der Steuereinrichtung betätigt, so daß die automatische Koordinierung des Lösens der Modulelemente und des Transportes des Trägerbandes gewährleistet ist.

In einem der Modulelemente sind üblicherweise die Reaktionskammern angeordnet. Wenn aber Makromoleküle parallel auf beiden Seiten des Trägerbandes synthetisiert werden sollen, sind vorzugsweise in beiden Modulelementen Reaktionskammern vorgesehen.

Bei dem Stellglied handelt es sich vorzugsweise um einen Druckzylinder, beispielsweise einen pneumatisch oder hydraulisch betätigbaren Zylinder. Der Druckzylinder kann doppelt wirkend ausgebildet sein, das heißt der Zylinderkolben wird in beiden Wirkungsrichtungen mit Druck beaufschlagt. Er kann auch federbelastet sein.

Bei einer vorteilhaften Ausführungsform weist jede Reaktionskammer eine Einlaßöffnung- und eine Auslaßöffnung auf, über welche die Raktionskammer mit den Fluidleitungen kommuniziert. Wenn die Reaktionskammern länglich ausgebildet sind, befinden sich die Öffnungen vorzugsweise an den Enden der Kammern.

Die Fluidleitungen für den Zu- und Abfluß der Reaktionsmedien können beispielsweise als Sammelleitungen ausgebildet sein, die sich in Leitungen zu den einzelnen Kammern aufspalten. Vorzugswiese ist aber zwischen mindestens zwei Reaktionskammern ein Verbindungskanal vorgesehen.

Vorteilhaft sind die Reaktionskammern und ihre Verbindungskanäle mäanderförmig angeordnet.

Die vorliegende Erfindung betrifft auch die Verwendung der oben beschriebenen Vorrichtung zur Synthese von auf einem funktionalisierten Trägermaterial gebundenen Oligonukleotiden.

Sie eignet sich vor allem zur Herstellung von Oligonucleotid-Bibliotheken, insbesondere zur Herstellung von sequenzüberlappenden Oligonucleotid-Bibliotheken.

Eine besonders bevorzugte Verwendung ist in der Herstellung von Diagnostik-Teststreifen zu sehen.

Sie ist auch zur Herstellung von Teststreifen zur DNA-Sequenzierung geeignet.

Schließlich betrifft die Erfindung ein Verfahren zur automatischen Synthese von Oligonucleotiden auf einem Trägerband mittels einer Synthesevorrichtung mit einem zumindest zwei Modulelemente umfassenden Synthesemodul, wobei man das Trägerband in das Synthesemodul transportiert und dort positioniert, das Synthesemodul durch Zusammenpressen der beiden Modulelemente nach außen abdichtet, einen Syntheseschritt mit Hilfe eines üblichen Syntheseautomaten durchführt, anschließend die beiden Teile des Synthesemoduls voneinander löst und das Band um eine Wegstrecke, die dem Abstand zweier benachbarter Reaktionskammern des Synthesemoduls entspricht, weitertransportiert und erneut positioniert. Erfindungsgemäß ist das Verfahren vollständig automatisiert, wobei man zur Steuerung und Koordination von Transport und Positionierung des Trägerbandes, des Zusammenpressens der Modulelemente, jedes Syntheseschritts und des Lösens der Modulelemente ein Taktsignal ausnützt, das der Syntheseautomat abgibt und für das ein Mikrocontroller empfänglich ist, welcher wiederum Aktoren wie Schrittmotoren, pneumatische Pressen und ähnliches steuert.

Das erhaltene Syntheseprodukt ist dabei aufgrund der gewählten Dimension der Reaktionskammern in Abstimmung mit der Beladung des bandartigen Flachträgers so gewählt, daß ausreichend Material für nahezu alle weiteren Anwendungen des Produktes vorliegt.

Durch die Verwendung des Flachträgers ist eine schnelle und kostengünstige Synthese möglich. Die Verwendung des Flachträgers ermöglicht desweiteren eine hohe Reinheit des Syntheseproduktes, weshalb weitestgehend auf weitere Reinigungsschritte verzichtet werden kann. Da die Vorrichtung den automatischen Transport des Flachträgers ermöglicht, entfallen die sonst üblichen Totzeiten des Syntheseautomaten. Die Verwendung des Flachträgers beliebiger Länge erlaubt eine eindeutige Zuordnung und Lokalisierung der hergestellten Sequenzen auf dem Träger. Die Vorrichtung läßt sich an den unterschiedlichsten Syntheseautomaten betreiben und ist daher universell mit nahezu allen am Markt erhältlichen Geräten einzusetzen.

Die vorliegende Erfindung wird im folgenden unter Bezugnahmeauf in beigefügten Zeichnungen dargestellte Ausführungsbeispiele ausführlicher erläutert. In den Zeichnungen zeigt:
- Figur 1:: eine schematische Darstellung einer erfindungsgemäßen Synthesevorrichtung, die an einen kommerziell erhältlichen Syntheseautomaten angeschlossen ist, wobei aus Übersichtsgründen die Transportmittel für das Trägerband nicht dargestellt sind;
- Figur 2:: eine detailliertere Darstellung der erfindungsgemäßen Synthesevorrichtung aus Figur 1 mit schematisch dargestellten Transportmitteln für das Trägerband;
- Figur 3:: ein Detail der Transportmittel aus Figur 2;
- Figur 4:: eine Stirnansicht einer zweiteiligen Ausführungsform des Synthesemoduls der Vorrichtung der Figur 2;
- Figur 5:: eine perspektivische schematische Darstellung des beweglichen Oberteils des Synthesemoduls der Figur 4;
- Figur 6:: eine Unteransicht des Moduielementes der Figur 5;
- Figur 7:: eine der Figur 6 entsprechende Ansicht einer Variante des oberen Modulelementes;
- Figur 8:: einen Längsschnitt des Modulelementes der Figur 7;
- Figur 9:: ein beispielhaftes Blockschaltbild, welches die Prozeßautomatisierung der Vorrichtung gemäß Figur 1 verdeutlicht; und
- Figur 10:: ein beispielhaftes Ablaufdiagramm zur Prozeßsteuerung mit dem Steuergerät gemäß Figur 9.

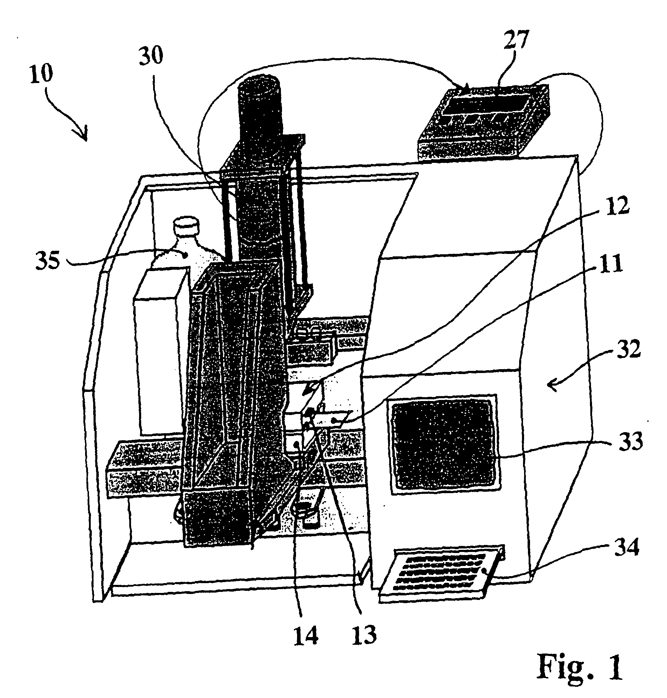

In Figur 1 erkennt man den prinzipiellen Aufbau der erfindungsgemäßen Synthesevorrichtung 10, die mit einem herkömmlichen Syntheseautomaten 32 (Eppendorf/Biotronik Ecosyn D300) verbunden ist. Der Syntheseautomat 32 weist ein Display 33 und eine Bedienungstastatur 34 auf, über die er mit den notwendigen Prozeßdaten und der gewünschten Nucleotidsequenz programmiert werden kann. Der Syntheseautomat 32 stellt alle für die Oligonucleotidsynthese erforderlichen Chemikalien zusammen, steuert die benötigten Volumina und den gesamten Reaktionsablauf. Die benötigten Chemikalien kann der Automat beispielsweise aus Vorratsflaschen 35 abpumpen.

Die erfindungsgemäße Synthesevorrichtung 10 weist ein Synthesemodul 12 auf, welches aus einem ersten Modulelement 13 und einem zweiten Modulelement 14 besteht. Zwischen den beiden Modulelementen ist das funktionalisierte Trägerband 11 geführt. Aus Gründen der Übersichtlichkeit sind die Transportmittel für das Trägerband 11 in Figur 1 nicht dargestellt. Man erkennt jedoch eine pneumatische Presse 30, die mit dem beweglichen ersten Modulelement 13 zusammenwirkt und diese bei Durchführung eines Syntheseschrittes gegen das darunterliegende zweite Modulelement 14 preßt. Dadurch werden die Reaktionskammern des Synthesemoduls gegen die Umgebung luftdicht verschlossen. Mit Hilfe eines Filterdruckminderers läßt sich die Druckraft in weiten Grenzen einstellen. Alternativ kann eine andere, dem Stand der Technik entsprechende Ausführung von Presse verwendet werden. Vor der Verschiebung des Bandes 11 wird das erste Modulelement 13 vom zweiten Modulelement 14 gelöst, so daß das Band freigegeben wird. Im dargestellten Beispiel wird eine direkt wirkende Pneumatikpresse mit doppelt wirkendem Zylinder verwendet, d.h. der Stößel wird in beide Richtungen per Luftdruck bewegt (Presse Nr. 24, Fa. Schmidt Feintechnik GmbH, St. Georgen, Deutschland).

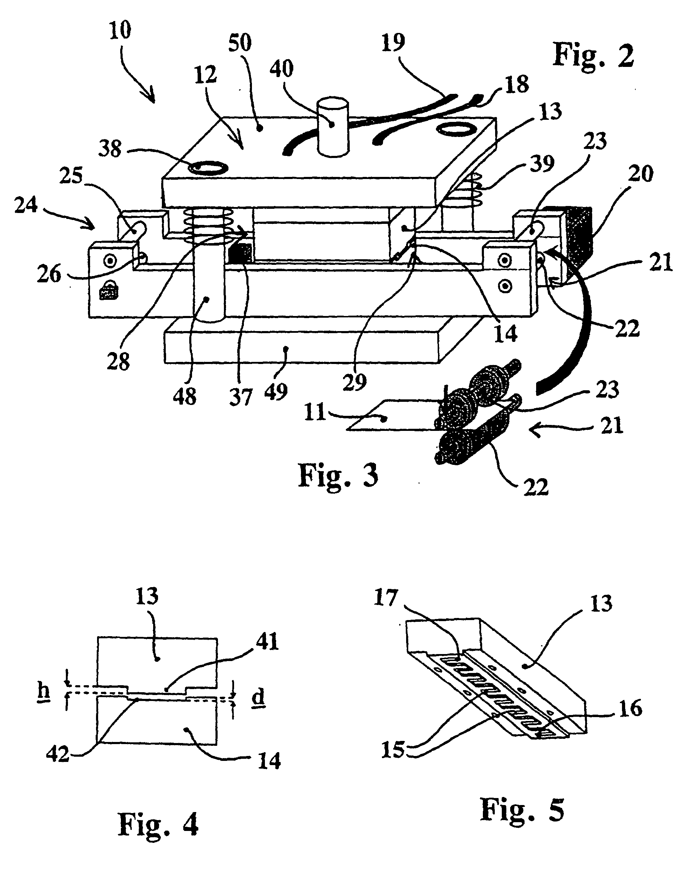

Die erfindungsgemäße Vorrichtung ist detaillierter in Figur 2 dargestellt; dort allerdings ohne Trägerband. Man erkennt wiederum das erste Modulelement 13 und das zweite Modulelement 14 des Synthesemoduls 12. Das Synthesemodul weist einen Eintrittsbereich 28 für das Trägerband und einen Austrittsbereich 29 auf. Dem Austrittsbereich 29 nachgeordnet erkennt man Zugmittel, die aus einem von einem Schrittmotor 20 angetriebenen Walzenpaar 21 bestehen. Das Walzenpaar 21 ist außerdem in Figur 3 etwas detaillierter in einem größeren Maßstab dargestellt. Die vom Motor angetriebene Walze 22 und die Andruckwalze 23 werden leicht gegeneinander gedrückt (Pfeil in Figur 3). Das Trägerband 11 kann zwischen ihnen hindurchgeführt werden, wie insbesondere aus Figur 3 hervorgeht. Im vorliegenden Beispiel ist die Vorrichtung 10 für einen unidirektionalen Transport des Folienbandes 11 vorgesehen, so daß am gegenüberliegenden Ende der Vorrichtung, das heißt in der Nähe des Eintrittsbereiches 28 des Trägerbandes in das Synthesemodul 12 ein nicht angetriebenes zweites Walzenpaar 24 als Führung für das Band vorgesehen ist. Das zweite Walzenpaar 24 besteht wiederum aus einer Andruckwalze 25 und einer Gegenwalze 26. Für einen bidirektionalen Transport könnte man vorsehen, entweder die Walze 25 oder die Walze 26 ebenfalls mit einem Schrittmotor zu versehen, wobei das in Figur 1 gezeigte Steuergerät je nach gewünschter Vorschubrichtung die Betätigung eines der beiden Motoren bewirkt.

Beim Transport des Trägerbandes 11 wird mit Hilfe einer Lichtschranke 37 überprüft, ob das Ende des Bandes am Eingang 28 des Synthesemoduls 12 angelangt ist. Ist das Trägerband 11 zu Ende, wird die Presse 30 geschlossen und die automatische Steuerung bricht den Prozeß ab. Dadurch ist sichergestellt, daß sich bei unbeobachteter Synthese immer ein Trägermaterial 11 im Synthesemodul 12 befindet.

Das Synthesemodul 12 befindet sich dabei zwischen zwei Stahlplatten, einer Grundplatte 49 und einer Anschlagplatte 50. Das erste Element 13 des Synthesemoduls 12 wird von der pneumatischen Presse 30 betätigt. Zu diesem Zweck weist sie zu einen Führungsbolzen 40 für die Presse auf. Gegen die Anschlagplatte 50 kommt ein (nicht dargestellter) Stößel der Presse 30 in Anlage. Die Anschlagplatte 50 wird durch zwei Messinggleitlager 38 geführt, in welche Führungsstifte 48 eingreifen, die in der Grundplatte 49 der Synthesevorrichtung 10 verankert sind. Die Anschlagplatte 50 liegt auf zwei Sätzen Tellerfedern 39, welche das Synthesemodul 12 mit einer Kraft von 2.8 kN öffnen. Bei einem Luftdruck von 6 bar wird das Synthesemodul mit einer resultierenden Kraft von 5.7 kN (Kraft des Presse minus Gegenkraft der Federn) abgedichtet. Wenn das Synthesemodul geöffnet ist, kann das Trägerband 11 transportiert werden.

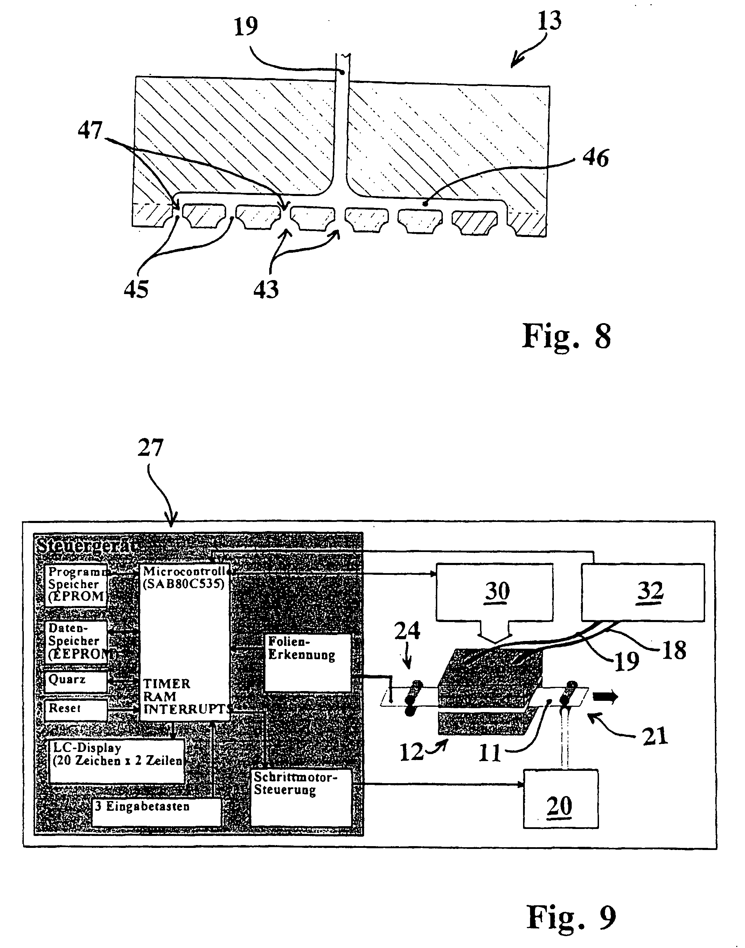

Außerdem erkennt man in Figur 2 die Zufuhrleitung 18 und die Abflußleitung 19, mit denen Chemikalien von dem Syntheseautomaten 30 in die erfindungsgemäße Synthesevorrichtung geführt werden bzw. aus dem Synthesemodul in den Automaten 30 rückgeführt werden (siehe auch Figur 9).

In Fig. 4 erkennt man die Stirnansicht einer zweiteiligen Variante des Synthesemoduls 12. Das erste Modulelement 13 ist gegen das zweite Modulelement 14 beweglich. Die beiden Modulelemente bestehen vorzugsweise aus Teflon, so daß sie leicht zu reinigen und chemisch weitgehend inert sind. Beim Zusammendrücken der Modulelemente ist eine gute Abdichtung erhältlich. Dies wird insbesondere durch die dargestellte Form unterstützt, bei der das obere Modulelement 13 einen Vorsprung 41 aufweist, der beim dargestellten Prototyp eine Höhe h von 2 mm besitzt. Der Vorsprung 41 kann in einen Einschnitt 42 mit eine Tiefe d von 1mm im zweiten Modulelement 14 gedrückt werden.

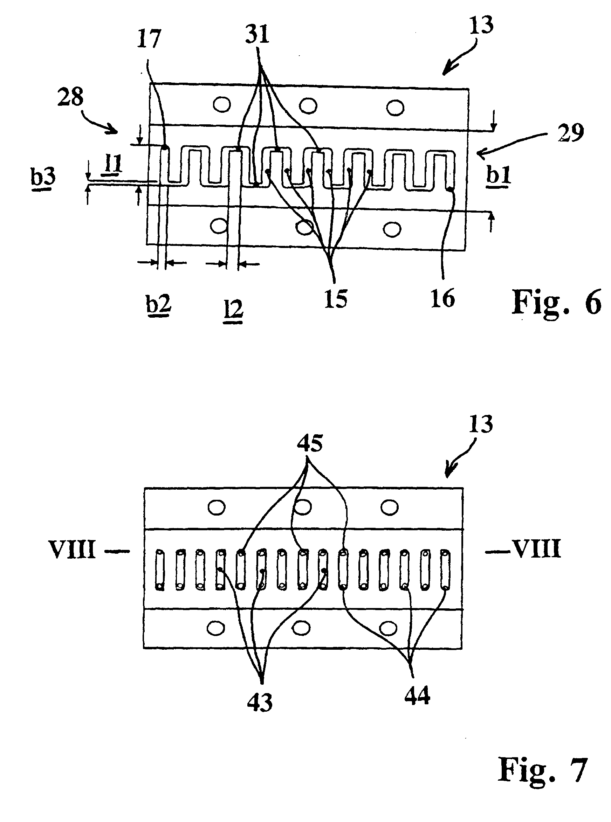

In Fig. 5 ist eine perspektivische Darstellung von unten auf das erste Modulelement 13 dargestellt. Im Vorsprung 41 sind die Reaktionskammern 15 ausgespart. Die Reaktionskammern 15 sind in der Darstellung der Fig. 6, die eine Unteransicht des Modulelementes der Fig. 5 ist, besser zu erkennen. Das Modulelement weist im dargestellten Beispiel fünfzehn parallele längliche Reaktionskammern 15 auf. Jeder Reaktionskanal besitzt eine Länge l1 von ca. 10 mm und eine Breite b2 von 2 mm. Die Breite b1 des Vorsprungs 41 des Modulelementes 13 beträgt ca. 20 mm. Zwischen den Reaktionskammern sind Verbindungskanäle 31 mit eine Länge l2 von 3mm und einer Breite b3 von 1 mm vorgesehen, die jeweils ein Ende einer Reaktionskammer mit dem Anfang der nachfolgenden Kammer verbinden. Es entsteht dabei die dargestellte mäanderförmige Struktur, so daß Verbindungskanäle nur bei jedem zweiten Syntheseschritt auf entsprechende Synthesefelder auf dem Träger treffen. Selbst wenn die Verbindungskanäle daher zum Träger offen sind, entstehen in diesen Bereichen nur Sequenzen mit verkürzter Länge, die für den jeweiligen Einsatzzweck des Trägers unproblematisch sind. Am Anfang und Ende der mäanderartigen Struktur der Reaktionskanäle ist eine Einlaßöffnung 16 bzw. eine Auslaßöffnung 17 vorgesehen, die über die Fluidleitungen 18,19 mit dem Syntheseautomaten 32 kommunizieren.

Die hier genannten Größenangaben sind nur beispielhaft für den beschriebenen Prototyp zu sehen. Es können auch, insbesondere bei nicht-präparativen Synthesen wesentlich kleinere Abmessungen gewählt werden, vor allem wenn andere Materialen als Teflon verwendet werden, etwa Halbleiter-Chips mit entsprechend geätzten Strukturen.

Fig. 7 zeigt eine weitere Variante der Reaktionskammern des ersten Synthesemoduls 13. Im Gegensatz zur Ausführungsform der Figur 6 sind hier die einzelnen Reaktionskammern 43 nicht über Verbindungskanäle miteinander verbunden. Vielmehr weist jede Reaktionskammer einen eigenen Einlaß 44 und einen eigenen Auslaß 45 auf.

In Fig. 8 ist ein Schnitt durch das Modulelement 13 der Fig. 7 entlang der Linie VIII-VIII in Fig. 7 dargestellt. Man erkennt, daß die Auslässe 45 jeder Kammer 43 über Verteilerkanäle 47 in einem gemeinsamen Sammelkanal 46 münden, der wiederum durch die Fluidleitung 19 mit dem Syntheseautomaten 32 verbunden ist. In entsprechender Anordnung, hier aber nicht dargestellt - sind die Einlässe 44 der Reaktionskammern 43 über Verteilerkanäle und einen Sammelkanal mit der Fluidleitung 18 verbunden, über die Reagenzien aus dem Syntheseautomaten 32 in die Kammern 43 gefördert werden. Die dargestellte Variante des Modulelementes 13 hat den Vorteil, daß die einzelnen Reaktionskammern schneller mit den Reagenzien gespült werden können. Die Herstellung eines derartigen Modulelementes mit Sammel- und Verteilerkanälen ist dann besonders einfach, wenn es selbst aus zwei Untereinheiten aufgebaut ist, wie in Figur 8 durch die unterschiedliche Schraffur angedeutet wurde.

In Fig. 9 ist ein Blockdiagramm eines beispielhaften Steuergerätes 27 dargestellt, welches abhängig von Signalen des Syntheseautomaten 32 sowohl die pneumatische Presse 30 als auch den Schrittmotor 20 betätigt. Der hier verwendete Motor 20 bewegt die Folie 11 im µm-Bereich. Zusammen mit einem handelsüblichen Syntheseautomaten gewährleistet die erfindungsgemäße Vorrichtung die automatische Herstellung von Oligomeren. Das Steuergerät 27 besteht aus einer Microcontrollerschaltung mit Eingabetasten, Display, Motorsteuerung, Programm- und Datenspeicher und Schnittstellen für Presse und Syntheseautomat. Der Microcontroller, welcher den zeitlichen Ablauf der Synthese steuert, kommuniziert mit dem Syntheseautomat und beeinflußt die Aktoren wie Motor und Presse. Für die Steuerung wird eine geeignete Ansteuer-Software erstellt. Dabei werden Programmteile nach deren Funktion in einzelne Segmente aufgeteilt. Daher ergeben sich sehr universell einsetzbare Unterprogramme, die z.B. komplett die Ansteuerung des Displays oder des Datenspeichers übernehmen. Um das Programm offen für andere Anwendungen zu halten, werden Prozeßschritte in das Programm aufgenommen, die einen sehr variablen Einsatz unterschiedlichster Synthesemodule erlauben. Das Programm kann beispielsweise in einem Speicher, etwa einem EPROM des Steuergeräts dauerhaft abgespeichert werden. Er behält die Daten auch bei abgeschalteter Betriebsspannung im Speicher. Bei dem hier gewählten Microcontroller handelt es sich beispielsweise um den SAB80C535 von Siemens (High-Performance 8-Bit CMOS Single-Chip Microcontrollers SABBOC515/80C 535, Data Sheet, Siemens AG, München, 1995). Dieser steuert den gesamten Ablauf des Prozesses.

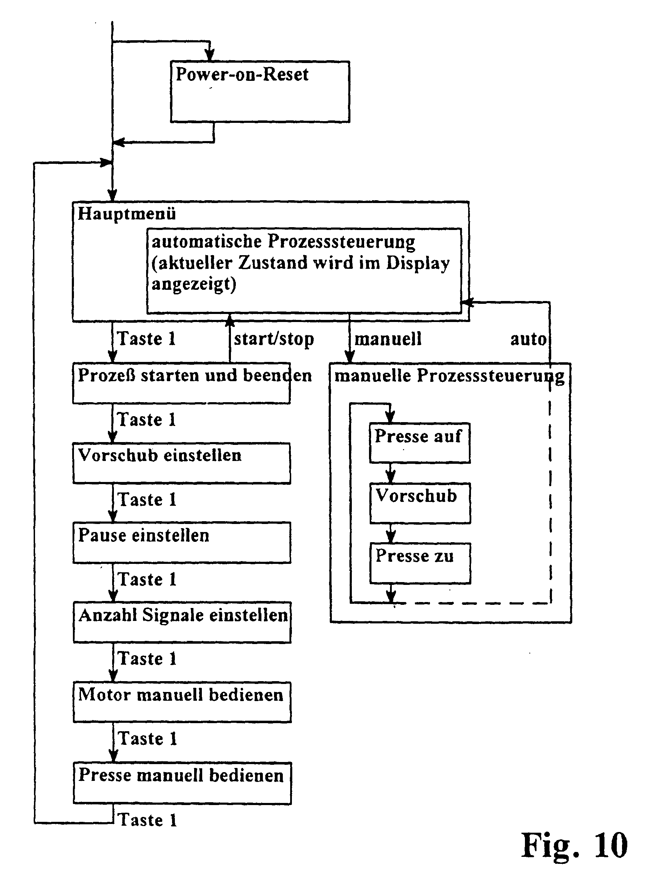

In Fig. 10 ist ein typischer Ablauf des automatischen Syntheseverfahrens dargestellt. Beim Einschalten hat man die Möglichkeit, spezielle Parameter in einem Power-on-Reset-Menü einzustellen. Bei den Parametern handelt es sich um den Trägervorschub und Zähler bzw. Timer für den Prozeßablauf. Wenn der Automat gestartet wird, können in den Parametermenüs keine Änderungen mehr vorgenommen werden. Dieser Zustand wird durch eine Leuchtdiode angezeigt. Der Benutzer wird nun aufgefordert, die Presse zu schließen und den Syntheseautomaten zu starten. Der aktuelle Zustand des Steuergerätes wird ab jetzt im Hauptmenü angezeigt, in welches man nach dem Starten automatisch gelangt. Mit einer Taste kann man in die manuelle Prozeß-Steuerung wechseln. Im automatischen Betriebsmodus wird jedoch der weitere Prozeßablauf durch das Zusammenspiel von Mikrocontroller und Synthesautomat selbstätig gesteuert.

Im folgenden sind bevorzugte Anwendungsbeispiele der erfindungsgemäßen Vorrichtung beschrieben:

### Beispiel 1: Automatische Synthese von aufeinanderfolgenden sequentiell unabhängigen Oligonucleotidfeldern

Durch die Ankopplung eines kommerziellen Syntheseautomaten 32 an die in den Figuren 1 und 2 beispielhaft dargestellte Synthesevorrichtung 10 kann eine parallele Synthese von Oligonucleotiden, deren Sequenz beliebig wählbar ist, auf einem Flachträger, etwa einem Folienband 11, durchgeführt werden. Wird z.B. ein Viersäulen-Gerät verwendet, können vier voneinander unabhängige, linear angeordnete Synthesmodule 12 an den Automaten 32 angeschlossen werden. Es ist auch denkbar, unabhängige Reaktionskammern oder Gruppen von Reaktionskammer innerhalb eines Moduls vorzusehen. Mit der erfindungsgemäßen Vorrichtung werden die Module (oder das Module) mit den integrierten unabhängigen Reaktionskammern und dem dazwischen befindlichen Flachträger nach aussen hin absolut dicht verschliessen, und der Syntheseautomat führt die parallele Synthese auf dem Flachträger in den unabhängigen Feldern (Reaktionskammern) durch. Nach Beendigung aller vier paralleler Synthesen erhält die erfindungsgemäße Vorrichtung von dem Syntheseautomaten 32 ein definiertes Signal, welches die Steuereinheit 27 veranlasst, das Modul 12 zu öffnen und den Flachträger 11 soweit aus dem Synthesemodul zu transportieren, daß nun jedem Feld ein neuer Abschnitt des Flachträgers 11 zur Verfügung steht. Als Beispiel sei angenommen, daß die Reaktionsfelder (Kammern) eine Breite von 1 cm haben und der Abstand voneinander auch 1 cm sei. Bei vier Feldern muß demnach der Träger um 4 x (1cm + 1 cm) = 8 cm weitertransportiert werden. Da der Flachträger in einer beliebigen Länge zur Verfügung stehen kann, ist somit eine Synthese ohne Unterbrechung möglich. Ähnlich einem Kassettenrecorder kann der Flachträger dann durch den Automaten geführt werden, wobei das Band jeweils zur Synthese angehalten wird und nach Vollendung der Synthese weitergeführt werden kann.

### Beispiel 2: Automatische Synthese einer Abfolge von sequenzüberlappenden Oligonucleotiden

Die Automatisierung mit der erfindungsgemäßen Vorrichtung kann auch auf ein Verfahren zur Erzeugung sequenzüberlappender Oligonucleotide angewandt werden. Bei diesem Verfahren ist es notwendig, den Flachträger nach jeder Kopplung um eine exakte Länge weiterzutransportieren. Durch Verwendung des automatischen Apparats kann nun dieser Transport selbständig durchgeführt werden. Somit ist die Synthese einer Anordnung sequenziell überlappender Oligonucleotide über einen längeren Zeitraum ohne weitere Kontrolle durch den Betreiber der Anlage möglich.

### Beispiel 3: Prozeßautomatisierung

Um eine einfache Handhabung und eine flexible Einsetzbarkeit der erfindungsgemäßen Vorrichtung zu gewährleisten, wird eine Steuerung mit einem Microcontroller realisiert. Als Reaktionskammer 15 für die chemische Synthese dient ein Synthesemodul 12, welches aus einem beliebigen, gegenüber der verwendeten Chemie inerten Material, beispielsweise Polytetrafluorethylen (PTFE), besteht. Die Oligomere werden auf einem Flachträger 11 (z.B. einer funktionalisierten Polypropylenfolie) synthetisiert, welcher sich innerhalb des Synthesemoduls 12 befindet. Um zu gewährleisten, daß die Reaktionskammer 15 absolut dicht ist, wird das Synthesemodul 12 mit einer Presse 30 abgedichtet. Die für die Synthese nötigen chemischen Schritte werden auf dem Syntheseautomat 32 programmiert, wobei an definierten Stellen Triggerimpulse für das Steuergerät abgegeben werden können. Der Flachträger 11 kann dabei automatisch mit einem Motor 20 sehr präzise positioniert werden. Hier wurde für den Transport ein Schrittmotor eingesetzt. Der Flachträger 11 befindet sich dabei zwischen zwei Walzen , wovon eine über ein einfaches Getriebe vom Motor angetrieben wird.

## Patentansprüche

1. Vorrichtung zur automatischen Synthese von Makromolekülen auf einem bandartigen Trägermaterial (11), mit mindestens einem nach außen abdichtbaren Synthesemodul (12), das wenigstens eine Reaktionskammer (15,43) und Fluidleitungen (18,19,45,46) zum Befüllen und Entleeren der Reaktionskammer (15,43) mit und von Reaktionsmedien umfaßt, wobei das Trägermaterial (11) in das Synthesemodul (12) einführbar ist und mit der Reaktionskammer (15,43) in Kontakt gebracht werden kann, und mit durch eine Steuereinrichtung (27) betätigbaren Transportmitteln (20-26) zum Verschieben des Trägermaterials (11),
**dadurch gehennzeichnet, daß**
das Synthesemodul (12) mehrere Reaktionskammern (15,43) aufweist, die, in Verschiebungsrichtung des Trägermaterials (11) gesehen, in einem bestimmten Abstand voneinander angeordnet sind, und daß die Steuereinrichtung (27) derart ausgebildet ist, daß das Trägermaterial (11) um eine Wegstrecke verschiebbar ist, die dem Abstand der Reaktionskammern (15,43) voneinander entspricht.

2. Vorrichtung gemäß Anspruch 1, **dadurch gekennzeichnet, daß** die Transportmittel ein erstes motorbetriebenes Zugmittel (20-23) umfassen, das nach dem Austrittsbereich (29) des Trägermaterials (11) aus dem Synthesemodul (12) angeordnet ist.

3. Vorrichtung gemäß Anspruch 2, **dadurch gekennzeichnet, daß** die Transportmittel ein zweites motorbetriebenes Zugmittel (24-26) umfassen, das vor dem Eintrittsbereich (28) des Tragermaterials (11) in das Synthesemodul (12) angeordnet ist.

4. Vorrichtung gemäß einem der Ansprüche 2 oder 3, **dadurch gekennzeichnet, daß** jedes Zugmittel einen Schrittmotor (20) aufweist.

5. Vorrichtung gemäß einem der Ansprüche 1 bis 4, **dadurch gekennzeichnet, daß** das Synthesemodul (12) im Ein- und Austrittsbereich (28,29) des Trägerbandes Dichtlippen aufweist.

6. Vorrichtung gemäß einem der Ansprüche 1 bis 5, **dadurch gekennzeichnet, daß** jedes Synthesemodul (12) wenigstens zwei gegeneinander bewegliche Modulelemente (13,14) umfaßt, die jeweils der Ober- und Unterseite des Trägerbandes (11) zugeordnet sind, wobei zumindest ein Modulelement (12) mit einem durch die Steuereinrichtung betätigbaren Stellmittel (30) verbunden ist, welches ein lösbares, dichtes Aneinanderpressen der beiden Modulelemente (13,14) ermöglicht.

7. Vorrichtung gemäß Anspruch 6, **dadurch gekennzeichnet, daß** in beiden Modulelementen (13,14) Reaktionskammern vorgesehen sind.

8. Vorrichtung gemäß einem der Ansprüche 6 oder 7, **dadurch gekennzeichnet, daß** das Stellmittel (30) ein Druckzylinder ist.

9. Vorrichtung gemäß einem der vorhergehenden Ansprüche, **dadurch gekennzeichnet, daß** jede Reaktionskammer (15,43) eine Einlaßöffnung (16) und eine Auslaßöffnung (17) aufweist, über welche die Reaktionskammer mit den Fluidleitungen (18,19,45,46) kommuniziert.

10. Vorrichtung gemäß Anspruch 9, **dadurch gekennzeichnet, daß** zwischen mindestens zwei benachbarten Reaktionskammern (15) ein Verbindungskanal (31) vorgesehen ist.

11. Vorrichtung gemäß Anspruch 10, **dadurch gekennzeichnet, daß** die Reaktionskammern (15) und ihre Verbindungskanäle (31) mäanderförmig angeordnet sind.

12. Verwendung der Vorrichtung nach einem der vorhergehenden Ansprüche zur Synthese von auf einem funktionalisierten Trägermaterial gebundenen Oligonucleotiden.

13. Verwendung nach Anspruch 12, zur Herstellung von Oligonucleotid-Bibliotheken, insbesondere zur Herstellung von sequenzüberlappenden Oligonucleotid-Bibliotheken.

14. Verwendung nach Anspruch 13 zur Herstellung von Diagnostik-Teststreifen.

15. Verwendung nach Anspruch 14 zur Herstellung von Teststreifen zur DNA-Sequenzierung.

16. Verfahren zur automatischen Synthese von Oligonucleotiden auf einem Trägerband (11) mittels einer Synthesevorrichtung mit einem zumindest zwei Modulelemente (13,14) umfassenden Synthesemodul (12), welches mehrere Reaktionskammern (15,43) aufweist, wobei man
- das Tragerband (11) in das Synthesemodul (12) transportiert und dort positioniert,
- das Synthesemodul (12) durch Zusammenpressen der beiden Modulelemente (13,14) nach außen abdichtet,
- einen Syntheseschritt mit Hilfe eines üblichen Syntheseautomaten (32) durchführt,
- anschließend die beiden Elemente (13,14) des Synthesemoduls (12) voneinander löst;
und wenigstens einmal
- das Trägerband (11) um eine Wegstrecke, die dem Abstand zweier benachbarter Reaktionskammern (15,43) entspricht, weitertransportiert, erneut positioniert und einen weiteren Syntheseschritt durchführt,
wobei der Transport und die Positionierung des Trägerbandes (11), das Zusammenpressen der Modulelemente (13,14), jeder Syntheseschritt und das Lösen der Modulelemente (13,14) durch ein Taktsignal des Syntheseautomaten (30) gesteuert und koordiniert werden.

## Claims

1. Apparatus for automatically synthesising macromolecules on a strip of carrier material (11), having at least one synthesis module (12) which can be sealed off to the outside, which comprises at least one reaction chamber (15, 43) and fluid lines (18, 19, 45, 46) for filling the reaction chamber (15, 43) with reaction media and emptying the reaction chamber (15, 43) of reaction media, the carrier material (11) being adapted to be introduced into the synthesis module (12) and to be brought into contact with the reaction chamber (15, 43), and with transporting means (20-26) actuatable by a control device (27) for moving the carrier material (11) along, **characterised in that** the synthesis module (12) comprises a plurality of reaction chambers (15, 43) which, viewed in the direction of travel of the carrier material (11), are arranged at a certain spacing from one another, and **in that** the control device (27) is constructed so that the carrier material (11) is movable by a distance which corresponds to the spacing of the reaction chambers (15, 43) from one another.

2. Apparatus according to claim 1, **characterised in that** the transporting means comprise first motor-driven tensioning means (20-23) disposed after the exit area (29) of the carrier material (11) from the synthesis module (12).

3. Apparatus according to claim 2, **characterised in that** the transporting means comprise second motor-driven tensioning means (24-26) disposed before the entry area (28) of the carrier material (11) into the synthesis module (12).

4. Apparatus according to one of claims 2 or 3, **characterised in that** each tensioning means comprises a stepping motor (20).

5. Apparatus according to one of claims 1 to 4, **characterised in that** the synthesis module (12) has sealing lips in the entry and exit areas (28, 29) of the carrier strip.

6. Apparatus according to one of claims 1 to 5, **characterised in that** each synthesis module (12) comprises at least two module elements (13, 14) which are movable towards each other, each of which is associated with the upper and lower sides of the carrier strip (11), while at least one module element (12) is connected to a positioning means (30) actuated by the control device, which enables the two module elements (13, 14) to be pressed tightly but releasably together.

7. Apparatus according to claim 6, **characterised in that** reaction chambers are provided in both module elements (13, 14).

8. Apparatus according to one of claims 6 or 7, **characterised in that** the positioning means (30) is a pressure cylinder.

9. Apparatus according to one of the preceding claims, **characterised in that** each reaction chamber (15, 43) has an inlet opening (16) and an outlet opening (17) through which the reaction chamber communicates with the fluid lines (18, 19, 45, 46).

10. Apparatus according to claim 9, **characterised in that** there is a connecting channel (31) between at least two adjacent reaction chambers (15).

11. Apparatus according to claim 10, **characterised in that** the reaction chambers (15) and their connecting channels (31) are arranged in a meandering configuration.

12. Use of the apparatus according to one of the preceding claims for synthesising oligonucleotides bound on a functionalised carrier material.

13. Use according to claim 12, for preparing oligonucleotide libraries, particularly for preparing sequence-overlapping oligonucleotide libraries.

14. Use according to claim 13, for producing diagnostic test strips.

15. Use according to claim 14, for producing test strips for DNA sequencing.

16. Process for automatically synthesising oligonucleotides on a carrier strip (11), by means of a synthesising apparatus having a synthesis module (12) comprising at least two module elements (13, 14), which has a plurality of reaction chambers (15, 43), wherein
- the carrier strip (11) is transported into the synthesis module (12) and positioned therein,
- the synthesis module (12) is sealed off to the outside by pressing the two module elements (13, 14) together,
- a synthesis step is carried out using a conventional automatic synthesiser (32),
- then the two elements (13, 14) of the synthesis module (12) are released from each other; and at least once
- the carrier strip (11) is moved on by a distance corresponding to the spacing between two adjacent reaction chambers (15, 43), re-positioned, and another synthesis step is carried out,
the transporting and positioning of the carrier strip (11), the pressing together of the module elements (13, 14), each synthesis step and the releasing of the module elements (13, 14) being controlled and co-ordinated by a timing signal from the automatic synthesiser (32).

## Revendications

1. Dispositif de synthèse automatique de macromolécules sur une matière de support (11) en forme de bande, comportant au moins un module de synthèse pouvant être rendu étanche vis-à-vis de l'extérieur (12), qui comprend au moins une chambre de réaction (15, 43) et des conduites de fluide (18, 19, 45, 46) pour remplir la chambre de réaction (15, 43) avec des milieux de réaction et la vider de ceux-ci, la matière de support (11) pouvant être introduite dans le module de synthèse (12) et mise en contact avec la chambre de réaction (15, 43), et des moyens de transport (20, 26) pouvant être actionnés par un dispositif de commande (27) pour faire avancer la matière de support (11),
**caractérisé par le fait que** le module de synthèse (12) comporte plusieurs chambres de réaction (15, 43), qui, lorsqu'on les regarde dans le sens d'avancement de la matière de support (11), sont disposées à une distance déterminée les unes des autres, et que le dispositif de commande (27) est conçu de telle sorte que la matière de support (11) peut être avancée d'une distance qui correspond à la distance entre les chambres de réaction (15, 43).

2. Dispositif selon la revendication 1, **caractérisé par le fait que** les moyens de transport comprennent un premier moyen de traction entraîné par un moteur (20-23), qui est disposé dans le module de synthèse (12) après la zone de sortie (29) de la matière de support (11).

3. Dispositif selon la revendication 2, **caractérisé par le fait que** les moyens de transport comprennent un deuxième moyen de traction entraîné par un moteur (24-26), qui est disposé dans le module de synthèse (12) avant la zone d'entrée (28) de la matière de support (11).

4. Dispositif selon l'une quelconque des revendications 2 et 3, **caractérisé** parle fait que chaque moyen de traction comporte un moteur pas-à-pas (20).

5. Dispositif selon l'une quelconque des revendications 1 à 4, **caractérisé par le fait que** le module de synthèse (12) comporte des lèvres d'étanchéité dans la zone d'entrée et la zone de sortie (28, 29) de la bande de support.

6. Dispositif selon l'une quelconque des revendications 1 à 5, **caractérisé par le fait que** chaque module de synthèse (12) comporte au moins deux éléments de module mobiles l'un par rapport à l'autre (13, 14) qui correspondent respectivement l'un au dessus et l'autre au dessous de la bande support (11), au moins un élément de module (12) étant relié à un élément de réglage (30) pouvant être actionné par le dispositif de commande, qui permet un pressage étanche pouvant être desserré des deux éléments de module (13, 14) l'un contre l'autre.

7. Dispositif selon la revendication 6, **caractérisé par le fait que** des chambres de réaction sont prévues dans les deux éléments de module (13, 14).

8. Dispositif selon l'une ou l'autre des revendications 6 et 7, **caractérisé par le fait que** l'élément de réglage (30) est un vérin.

9. Dispositif selon l'une quelconque des revendications précédentes, **caractérisé par le fait que** chaque chambre de réaction (15, 43) présente une ouverture d'entrée (16) et une ouverture de sortie (17) par lesquelles la chambre de réaction communique avec les conduites de fluide (18, 19, 45, 46).

10. Dispositif selon la revendication 9, **caractérisé par le fait qu'**un canal de liaison (31) est prévu entre au moins deux chambres de réaction (15) voisines.

11. Dispositif selon la revendication 10, **caractérisé par le fait que** les chambres de réaction (15) et leurs canaux de liaison (31) sont disposés en forme de méandres.

12. Utilisation du dispositif selon l'une quelconque des revendications précédentes pour la synthèse d'oligonucléotides fixés sur une matière de support fonctionnalisée.

13. Utilisation selon la revendication 12 pour la fabrication de bibliothèques d'oligonucléotides, en particulier pour la fabrication de bibliothèques d'oligo-nucléotides se recouvrant séquentiellement.

14. Utilisation selon la revendication 13 pour la fabrication de bandes de test de diagnostic.

15. Utilisation selon la revendication 14 pour la fabrication de bandes de test pour le séquençage d'ADN.

16. Procédé de synthèse automatique d'oligo-nucléotides sur une bande de support (11) au moyen d'un dispositif de synthèse comportant un module de synthèse (12) incluant au moins deux éléments de module (13,14), qui présente plusieurs chambres de réaction (15,43), dans lequel :
- on transporte et on positionne la bande de support (11) dans le module de synthèse (12),
- on rend étanche vis-à-vis de l'extérieur le module de synthèse (12) par pressage l'un contre l'autre des deux éléments de module (13, 14),
- on effectue une étape de synthèse à l'aide d'un automate de synthèse courant (32),
- on sépare ensuite l'un de l'autre les deux éléments (13, 14) du module de synthèse (12) ;
et au moins une fois
- on fait avancer la bande de support (11) d'une distance qui correspond à l'écart entre deux chambres de réaction voisines (15, 43), on la positionne à nouveau et on effectue une autre étape de synthèse,
et dans lequel le transport et le positionnement de la bande de support (11), le pressage l'un contre l'autre des éléments de module (13, 14), chaque étape de synthèse et le desserrage des éléments de module (13, 14) sont commandés et coordonnés au moyen d'un signal de cadence de l'automate de synthèse (32).
